# EUROPEAN PATENT APPLICATION

(11) **EP 4 789 793 A1**
(43) Date of publication of application: **12.08.2026**
(21) Application number: 25157087.5
(22) Date of filing: 11.02.2025
(51) Int. Cl.: B22D 19/00, B22C 9/00, B22C 9/02, B22C 9/10, B22C 9/24, B22D 13/10, B22D 17/24, B22D 25/02, B28B 1/00, B33Y 10/00, B33Y 80/00, B22D 17/22

(54) **STEEL TOOLING COMPONENT WITH CONFORMAL COOLING**

(71) Applicant: Nemak, S.A.B. de C.V., 66017 García, Nuevo León (MX)
(72) Inventor: Junco de la Vega Fernandez, Alejandro, 66235 San Pedro (MX); Cordova Juarez, Alejandro, 66165 San Catarina (MX); Sanchez Fernandez, Roberto, 64630 Monterrey (MX)
(74) Representative: Cohausz & Florack

(57) **Abstract**

Disclosed is a method for producing a tooling component (200, 350), the method comprising: producing a casting mold (300) for steel casting the tooling component, wherein producing the casting mold comprises producing a ceramic core (340) by fused filament fabrication, the ceramic core defines at least a part of a conformal cooling channel (210, 360) in the tooling component; steel casting the tooling component with the casting mold, the ceramic core producing at least a part of the conformal cooling channel in the tooling component; removing the ceramic core from the tooling component. Disclosed is further a steel tooling component and a use of a steel tooling component.

## Description

### TECHNOLOGICAL FIELD

The present disclosure inter alia pertains to a steel tooling component, a method for producing a tooling component, and a use of a steel tooling component.

### BACKGROUND

Aluminum casting applications, e.g. during low or high pressure die casting, tooling components (e.g. inserts) are required, which not only provide a sufficient but also a defined cooling of the tooling component and thereby of the cast aluminum component being in contact with the respective tooling component.

In particular when casting tooling steel with traditional sand core methods, this often implies core deformations due to the extremely high temperatures required for casting. Additionally, there may also be the issue of increased porosity and reduced mechanical properties when working with sand cores. Sometimes, in particular if the core is very thin, the casting of such tooling components may not be feasible at all.

In one approach, one may use a conventional insert with machined cavities for providing cooling channels therein. However, such manufacturing is rather ineffective due to the geometric constraints of the cooling channels, which are often limited to straight paths, which does effectively not allow for conformal cooling. While the cycle time of such components may be high, also the production time and costs of such a solution is rather high. Due to the non-conformal cooling channels and the resulting imprecise cooling, there is also a high risk of porosity in the aluminum component to be manufactured, in particular in high density areas or with an improper feeding system.

In another approach, one may use a cast aluminum insert with conformal cooling channels, which may reduce the production time and costs of the insert, but also its cycle time. Further, aluminum casting utilizing cast aluminum tooling components with conformal cooling may lead to inserts which absorb heat too rapidly, leading to thermal shock and porosity in the aluminum component to be manufactured.

In yet another approach, one may produce the entire tooling component with additive manufacturing, which may allow to integrate cavities such as cooling channels into the tooling component directly during manufacturing. However, there are still certain constraints regarding the geometry of the tooling component as certain geometries require the integration of additional support material. For instance, in case of internal channels or holes with a diameter of 6 mm or more, internal support structure need to be added or a different profile shape, such as a diamond shape profile needs to be used, which is not as effective as e.g. a circular profile. There are also limitations regarding the overall component size, which are typically in the order of 400mm x 400mm. Further, the production of such tooling components or inserts is rather expensive.

### SUMMARY OF SOME EXAMPLE EMBODIMENTS

Thus, there is the need for an improved method for producing a tooling component, which may avoid at least some of the above disadvantages. In particular, there is the need to cast high temperature steel with complex internal cavities without the above disadvantages. In particular, there is a need for providing a tooling component which may allow for a cost and time efficient production thereof, a reasonable cycle time, while allowing for a low porosity in the component to be ultimately cast with such a tooling component.

According to the present disclosure, there is disclosed a method for producing a tooling component. The method comprises producing a casting mold for steel casting the tooling component. Said producing of the casting mold comprises producing a ceramic core by fused filament fabrication. The ceramic core defines at least a part of a conformal cooling channel in the tooling component. The method further comprises steel casting the tooling component with the casting mold. The ceramic core produces at least a part of the conformal cooling channel in the tooling component. The method further comprises removing the ceramic core from the tooling component.

According to the present disclosure, there is also disclosed a steel tooling component, wherein the steel tooling component is produced by a method of the present disclosure.

According to the present disclosure, there is also disclosed a use of a steel tooling component according to the present disclosure for casting an aluminum component, in particular by low pressure die casting, high pressure die casting, rotary casting or gravity casting.

The tooling component may in particular be an insert. The insert may then be used in aluminum casting, in particular in low pressure die casting (LPDC) or high pressure die casting (HPDC) applications, as will be described further below.

The casting mold may in particular comprise multiple components for defining the tooling component to be cast. For instance, the casting mold may comprise one or more external parts for defining the outer geometry of the tooling component, as will be described in more detail below. For instance, the casting mold may comprise one or more cores for defining internal cavities (such as the ceramic core for defining a cooling channel, as will also be described in more detail below) in the tooling component to be cast with the casting mold.

Said producing of the casting mold comprises producing a ceramic core by fused filament fabrication. Fused filament fabrication (FFF), may also be referred to as filament extrusion, fused deposition modeling or filament freeform fabrication. Fused filament fabrication may use a continuous filament of a thermoplastic material. For printing ceramic cores, the thermoplastic material may comprise a ceramic powder (such as silicon carbide, silicon nitride or zirconium oxide). The filament may be fed from a spool through a (moving and/or heated) printer extruder head, and is deposited onto the (growing) substrate to form the ceramic core. For this, the print head may be moved under computer control to define the printed shape. In an example, the head may move in two dimensions to deposit a layer and may then move vertically by a small amount to begin a new layer. After printing, further processing steps, such as de-binding, sintering and/or hard machining may follow. The ceramic core may then be combined with other parts of the mold, such as other mold parts made from casting sand, for instance. Fused filament fabrication may in particular allow to vary and set specific infill percentages, which will facilitate the removal of the ceramic core after steel casting the tooling component. In an advantageous embodiment, the ceramic core is at least partially hollow inside. In other words, the ceramic core may be considered an at least partially hollow section profile. Thus, the ceramic core may not be 100% dense but may have openings, clearances or cavities.

The ceramic core defines at least a part of a conformal cooling channel in the tooling component. Thus, after the ceramic core has been removed, the tooling component comprises a respective cooling channel. It is noted that in the present disclosure the channel is referred to as "cooling channel". However, it is understood that a cooling channel may not only be used for cooling but likewise be used for heating or generally any kind of temperature regulation or control, depending on the use case and medium used. Thus the cooling channel of the present disclosure may generally be understood as a channel for allowing a medium to flow through and to thereby provide temperature regulation or control (e.g. decrease or increase the temperature). The cooling channel may comprise and inlet and an outlet, i.e. it may allow a medium for regulating the temperature, e.g. a cooling medium to flow through it. A conformal cooling channel may be understood to be a cooling passageway which at least in sections follows the shape, profile and/or contour of the tooling component, which allows to perform a rapid uniform cooling (e.g. by use of a cooling medium flowing through the channel) in a subsequent casting process. For instance, the ceramic core and thus the conformal cooling channel may at least in sections run directly proximate and parallel to the forming surface of the tooling component. The ceramic core and thus the conformal cooling channel may at least in sections comprise a constant distance to the surface of the tooling component. For instance, the majority of the ceramic core and the resulting conformal cooling channel or even the whole thereof (e.g. except for required inlet and outlet sections) may follow the shape, profile, contour or surface of the tooling component. For instance, the ceramic core and thus conformal cooling channel may at least in part comprise curved or bent sections. For instance, the ceramic core and the conformal cooling channel may have a coil like geometry.

The method further comprises steel casting the tooling component with the casting mold. The steel may be cast to the final net or near-net shape. The steel may be a hot working steel such as H13 tooling steel, as will be explained in more detail below.

The method further comprises removing the ceramic core from the tooling component, as will also be described in more detail below. After the removal of the ceramic core from the tooling component, a cooling channel with a geometry corresponding to the ceramic core remains in the tooling component.

Specifically the use of fused filament fabrication in combination with the conformal cooling for steel tooling components has been found to be specifically advantageous for overcoming the disadvantages of the prior art. Specifically, due to the conformal cooling approach with steel a low porosity of a component cast thereafter utilizing the tooling component can be achieved, in particular compared to conventional cooling and conformal cooling with a cast aluminum. Furthermore, the tooling component can be produced rapidly and more cost efficient, in particular compared to approaches requiring machined cavities. Additionally, the costs of the approach described herein can also be significantly lower without any size restrictions when compared to producing the tooling component itself with additive manufacturing.

Moreover, using fused filament fabrication has the advantage of varying the infill percentage, which may significantly simplifies the removal of the ceramic core. Specifically, when utilizing materials such as zirconium oxide, they are capable of withstanding temperatures up to 1600°C. This allows the use of e.g. H13 tooling steel for the tooling component, which requires extremely high temperatures, close to 1550°C. Thus, simultaneously implementing both conformal cooling and ceramic cores presents a unique advantages being particularly relevant for developing solutions in low or high pressure die casting, where tooling has the potential to significantly reduce cycle times and enhance overall quality.

This described idea thus proposes a cast monolithic conformal cooling concept, which allows conformal cooling in large cast molds by using ceramic cores and/or core coating technologies. This in turn allows to achieve wall thicknesses <4.5mm through a thermo-regulatable mold e.g. for high pressure and low pressure die casting(HPDC, LPDC), for gravity in semi-permanent mold casting (GSPM) and for Rotacast.

In an example, the fused filament fabrication utilizes a silicon nitrate filament or an alumina filament for producing the ceramic core. The silicon nitride filament may contain silicon nitrate (Si3N4) powder with organic agents as a binder. Si3N4 may exhibit higher strength and fracture toughness than for instance SSiC. It has a very low coefficient of linear thermal expansion resulting in high resistance to thermal shock.

Alternatively, the fused filament fabrication may utilize a silicon carbide filament for producing the ceramic core. The silicon carbide filament may contain silicon carbide (SSiC) powder with organic agents as a binder. SSiC is extremely hard and has excellent corrosion resistance over the entire pH range.

In a further example, the fused filament fabrication utilizes a zirconium oxide filament for producing the ceramic core. ZrO2 has high strength at room temperature and, due to crack-induced transformation, very high fracture toughness. It is capable of withstanding temperatures of up to 1600°C.

In a further example, the fused filament fabrication utilizes an alumina filament for producing the ceramic core. The filament may contain alumina powder of high purity (e.g. above 99 percent). The use of appropriate organic agents as a binder results in a flexible filament that can be used for the FFF/FDM technology.

In an example, wherein producing the ceramic core comprises sintering the ceramic core. The sintering may be performed at a temperature of at least 1500°C, preferably at least 1600°C. The sintering may be performed in a nitrogen pressurized environment. Generally, the sintering may allow for enhanced material properties of the ceramic core, i.e. in particular an improved strength and hardness. Furthermore, by controlling the sintering conditions, material properties such as porosity, thermal conductivity, and wear resistance may even be tailored.

In an example, removing the ceramic core from the tooling component comprises a mechanical and/or chemical method for removing the ceramic core from the tooling component. For instance, the ceramic core may be removed by means of a leaching process. For instance, the mold may be placed in an acid and/or leach to dissolve the ceramics. For instance, an NaOH and/or KOH solution my be used. The ceramic core leaching process may comprise a pressure swing system. For instance the leaching process may comprise a boiling agitation. As a result of the ceramic core removal process, the steel tooling component with corresponding cooling passages can be obtained.

In an example, producing the casting mold further comprises producing a mold part (or multiple mold parts) by 3D sand printing. For instance, the one or more mold parts may be produced by binder jet sand printing. The binder used for the binder jet sand printing preferably is or comprises a furanic binder. Alternatively, it may also be possible to produce the one or more mold parts, in particular sand mold parts, with other processes. However, 3D printing of sand mold parts allows for rapid and flexible production of mold parts, which in particular do not require a too delicate geometry.

For instance, the one or more mold parts may define any of the external and/or internal geometry of the component to be cast. For instance, the mold parts may be (sand) cores and/or two mold halves defining a cavity for the steel casting. One or more ceramic cores may then be positioned within these halves as cores to define the (more delicate) cooling passages (e.g. as described above). In other words, it may be particularly advantageous to use 3D printed sand cores for the mold geometry (representing the external cast geometry), while ceramic cores are used for the interior cavities, which are usually more delicate.

In an example, the mold part, such as a mold half or a sand core, preferably comprises a zirconium coating. Such a coating may allow the sand mold parts to withstanding temperatures of up to 1600°C, making it suitable for casting an steel tooling component.

In an example, the infill percentage of the ceramic core is set below 50%, preferably below 20%, further preferably below 10%, further preferably below 5%. The infill percentage may indicate the volume of material compared to the volume of cavities in the 3D printed ceramic core. For instance, while the ceramic core may comprise a continuous outer wall for defining the wall of the cooling channel, the material inside the ceramic core may be significantly reduced so as to arrive the above indicated infill percentages. This allows to not only provide a time and resource efficient printing and sintering process of the ceramic core, but also an improved removal process, since chemicals more easily penetrate through the ceramic core facilitating the removal.

In an example, the tooling component is cast with a hot-working tool steel. For instance, the steel may be a chrome-molybdenum hot-work tool steel. For instance, the tooling component may be cast with an (AISI) H13 steel, also referred to as or 1.2344 or X40CrMoV5-1 steel. These types of steel are able to retain their material properties at high temperatures and can be heat-treated to a hardness of 45 HRC and an ultimate tensile strength of 1500 MPa.

In any example, tooling component is cast with a steel comprising the following components in weight % (remainder iron):

| | |
|---|---|
| C | 0,32-0,45 |
| Si | 0,80-1,20 |
| Mn | 0,20-0,50 |
| P | max. 0,030 |
| S | max. 0,030 |
| Cr | 4,75-5,50 |
| Mo | 1,10-1,75 |
| V | 0,80-1,20. |

In an example, the tooling component is a steel insert for aluminum casting. The steel insert allows a precise cooling of the cast aluminum components with efficient resources. Accordingly, in an example the method further comprises casting an aluminum component, in particular by low or high pressure die casting, using the tooling component.

In an example, the inserts may be thermoregulated during the casting process of the aluminum component. The inserts may thus be controlled to be set at a certain temperature and/or to decrease or increase the temperature of the insert. Thus, the temperature and/or temperature profile of the aluminum component during casting/cooling may be controlled.

The described approach of producing a steel tooling component may in particular allow for casting of aluminum components with wall thickness smaller than 4.5mm.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: shows an insert of the prior art with a non-conformal cooling channel;
- Fig. 2a: shows an example steel tooling component with a conformal cooling channel according to an example embodiment of the disclosure;
- Fig. 2b: shows a detailed cross-sectional view of the example conformal cooling channel of Fig. 2a;
- Fig. 3a: shows an example casting mold in a half transparent side view for producing an example steel tooling component;
- Fig. 3b: shows an example steel tooling component in a half transparent side view produced with the casting mold of Fig. 3a
- Fig. 4: shows a flow diagram of an example method of producing an example steel tooling component; and
- Fig. 5: shows a flow diagram of an example method of ceramic core removal process.

### DETAILED DESCRIPTION OF THE FIGURES

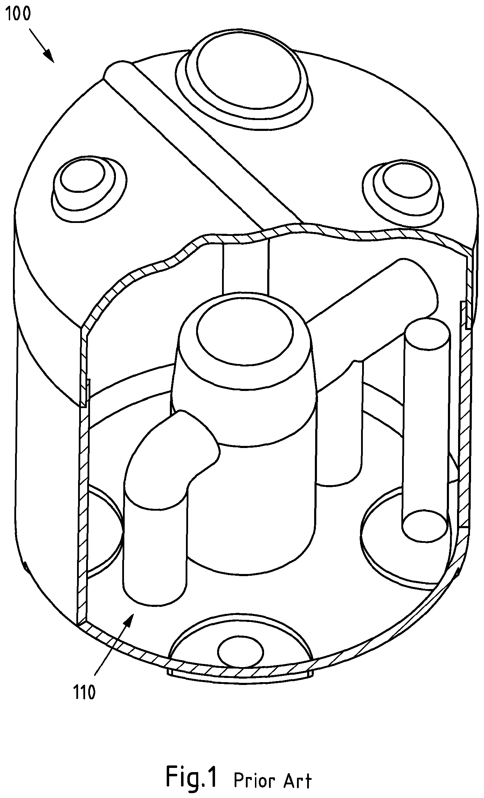

Fig. 1 shows an insert 100 of the prior art with a non-conformal cooling channel 110. The cooling channel 110 does not follow the upper forming surface of the insert 100 and can therefore only provide inferior cooling during an aluminum casting.

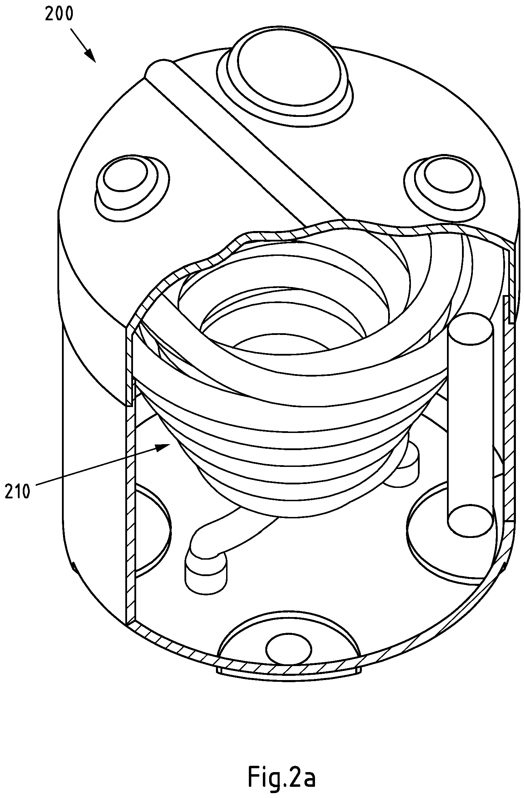

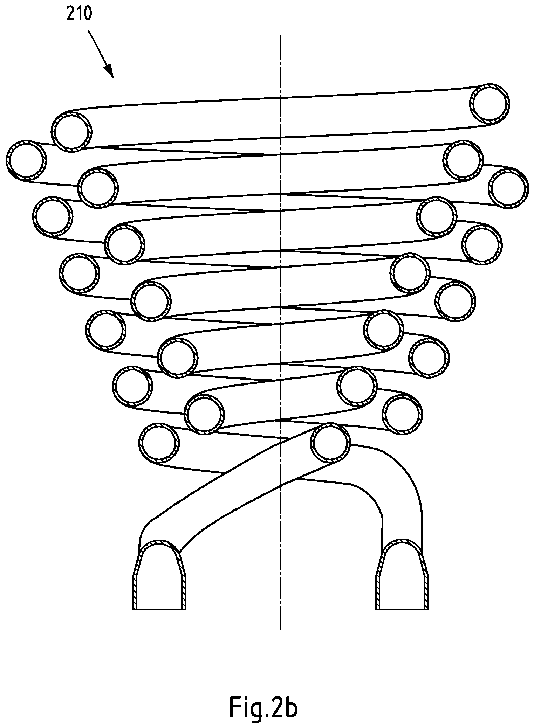

Fig. 2a shows an example steel tooling component 200 having a conformal cooling channel 210 according to an example embodiment of the disclosure. The steel tooling component 200 is in this case a steel insert for aluminum high pressure die casting, which corresponds to the one shown in Fig. 1. However, contrary to Fig. 1, the cooling channel 210 is a conformal cooling channel, essentially following the outer shape of the tooling component 200. The cooling channel 210 is detailed in a cross-sectional view in Fig. 2b. The cooling channel 210 comprises a coil-like geometry with curved and bent passages. The cooling channel 210 further comprises an inlet 220 and an outlet 230, so that a cooling medium can circulate through the cooling channel 210.

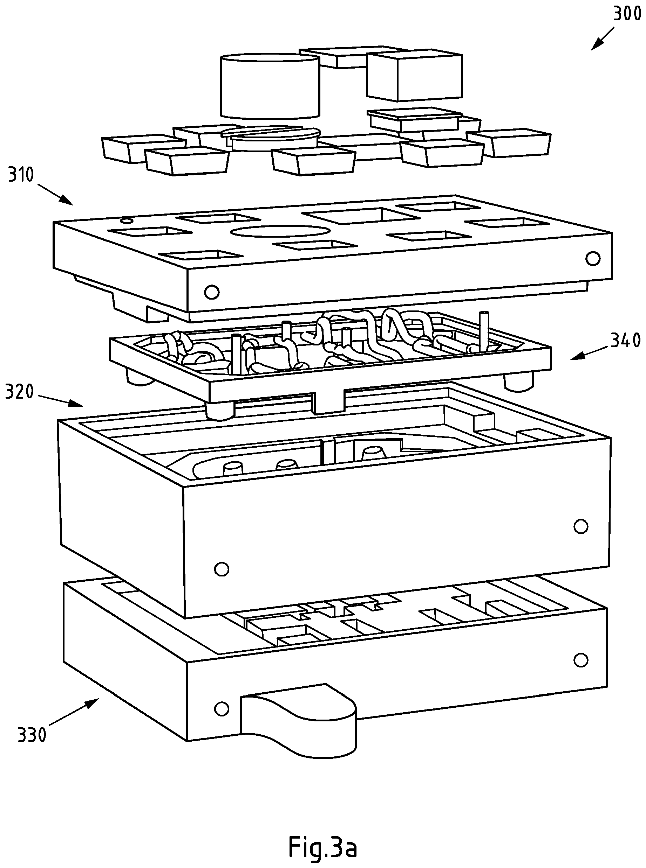

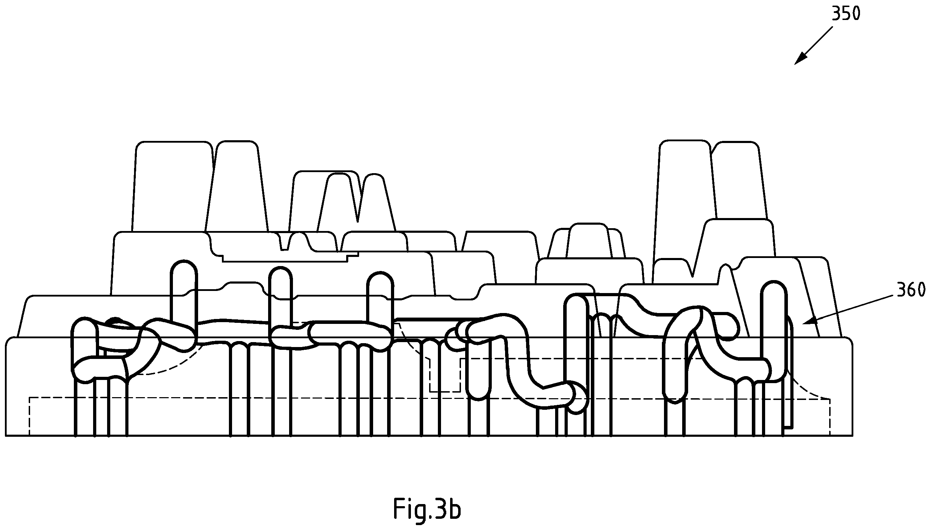

The tooling component 200 has been produced from a casting mold comprising a ceramic core produced by fused filament fabrication. Specifically, conformal cooling channel 210 was defined by the ceramic core, which has been removed from the tooling component 200 after steel casting the tooling component with the casting mold. This process will be described in more detail with respect to Fig. 3, 4 and 5.

Fig. 3a shows an example casting mold 300, also referred to as a core package, in a half-transparent side view for producing an example steel tooling component. The corresponding example steel tooling component 350, which is a steel insert for aluminum high pressure die casting, produced with the casting mold 300 is shown in Fig. 3b also in a half transparent side view. The casting mold inter alia comprises multiple mold parts 310, 320, 330, essentially defining the outer geometry of the steel tooling component to be cast, and a ceramic core 340 for defining the cooling channel.

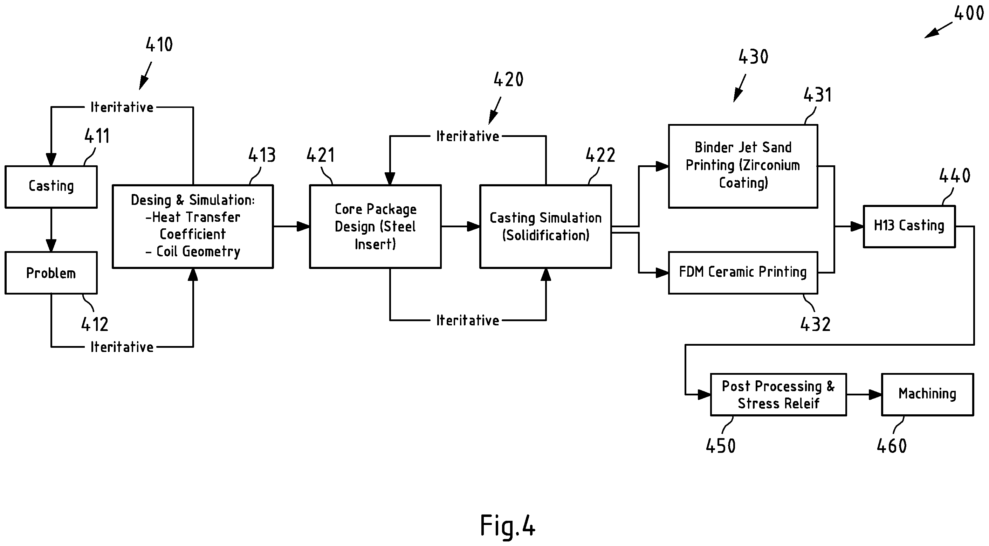

First, the design of the steel tooling component and the respective mold has to be determined, which process is described in more detail with respect to Fig. 4, showing a flow diagram 400 of an example method of producing an example steel tooling component. Generally, the process may first comprises an (e.g. iterative) component design stage 410, in which the casting of the aluminum component in particular with respect to the heat transfer coefficients and the geometry of the cooling channels in the steel tooling component (e.g. a certain coil geometry) is simulated and potential problems during casting are identified, so that the steel tooling component is iteratively optimized, actions 411, 412, 413. Then the process may comprise an (e.g. iterative) mold or core package design stage 420. The casting with the mold for the steel tooling component is simulated in particular with respect to the solidification and the design of the mold iteratively optimized, actions 421, 422. More specifically, when a corresponding digital component is designed, it may be imported to a 3d printing slicing software. Then, calculations for contractions can be adjusted for all (x, y, z) space directions as a further optimization.

The steel tooling component is then produced at stage 430. Some or all of the outer mold parts 310, 320, 330 are made from casting sand and are manufactured by 3D binder jet sand printing with a furanic binder. The mold parts 310, 320, 330 (or generally any part which comes into contact with the steel, for instance also further inner (sand) cores) are further coated with a zirconium coating, action 431.

The mold 300 further comprises a ceramic core 340 produced by fused filament fabrication with a silicon nitrate filament, action 342. The ceramic core 340 defines at least a part of a conformal cooling channel for the tooling component 350. Advantageously, the infill percentage of the ceramic core can be set rather low, for instance below 50%, 20%, 10%, or even below 5%. After printing, the ceramic core 340 is sintered in at 1600 °C in a nitrogen pressurized environment.

The tooling component is then cast in the mold 300 with a hot-working tool steel, such as H13 steel, action 440. During steel casting the tooling component in the casting mold 300, the ceramic core 340 produces the internal conformal cooling channel in the tooling component 350.

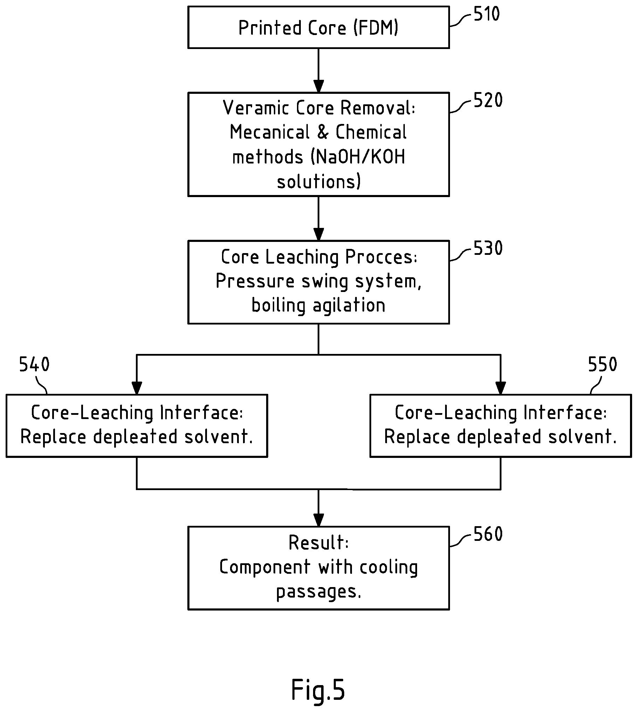

The ceramic core 340 is then removed from the tooling component 350, as exemplarily detailed in Fig. 5 showing a flow diagram 500 of an example method of ceramic core removal process. More specifically, after printing the ceramic core, action 510, the removal of the ceramic core may in particular comprise mechanical and/or chemical methods, action 520. For instance, the ceramic core may be removed by means of a core leaching process, e.g. by placing it in an acid and/or leach, such as an NaOH and/or KOH solution, action 530. Solvents which become depleted or lose their effectiveness (e.g. due to saturation with dissolved ceramic material or impurities) can be replaced, action 540. The activation rates of the solvent and its diffusion into the ceramic material can be optimized, action 550. For instance, the solvent temperature may be increased so as to lower the activation energy of the reaction and/or an optimal agitation or flow of the solvent may be ensured to avoid stagnant zones where diffusion is slower. As a result, a corresponding conformal cooling channel 360 remains, action 560.

The tooling component may then undergo further post processing, stress-relief, action 450, and/or machining, action 460.

### LIST OF REFERENCE SIGNS

- 100: tooling component
- 110: cooling channel
- 200: tooling component
- 210: conformal cooling channel
- 220: inlet
- 230: outlet
- 300: mold
- 310: mold part
- 320: mold part
- 330: mold part
- 340: ceramic core
- 350: tooling component
- 360: cooling channel
- 400: flow diagram
- 410: component design stage
- 411: casting
- 412: problem
- 413: design & simulation
- 420: core package design stage
- 421: designing core package for steel insert
- 422: simulating casting
- 430: component printing stage
- 431: binder jet sand printing
- 432: FFF ceramic printing
- 440: H13 casting
- 450: post processing, stress relief
- 460: machining
- 500: flow diagram ceramic removal process
- 510: obtaining printed core
- 520: ceramic core removal (mechanical & chemical)
- 530: core leaching process
- 540: replacing depleted solvent
- 550: optimizing diffusion, activation rates
- 560: obtaining component with cooling passages

## Claims

1. A method for producing a tooling component (200, 350), the method comprising:
- producing a casting mold (300) for steel casting the tooling component (200, 350), wherein producing the casting mold (300) comprises producing a ceramic core (340) by fused filament fabrication, the ceramic core (340) defines at least a part of a conformal cooling channel (210, 360) in the tooling component (200, 350);
- steel casting the tooling component (200, 350) with the casting mold (300), the ceramic core (340) producing at least a part of the conformal cooling channel (210, 360) in the tooling component (200, 350);
- removing the ceramic core (340) from the tooling component (200, 350).

2. The method of claim 1, wherein the fused filament fabrication utilizes a silicon nitrate filament, a silicon carbide filament, a zirconium oxide filament or an alumina filament for producing the ceramic core (340).

3. The method of claim 1 or 2, wherein producing the ceramic core (340) comprises sintering the ceramic core (340).

4. The method of any of claims 1 to 3, wherein removing the ceramic core (340) from the tooling component (200, 350) comprises a mechanical and/or chemical method for removing the ceramic core (340) from the tooling component (200, 350).

5. The method of any of claims 1 to 4, wherein producing the casting mold (300) further comprises producing a mold part (310, 320, 330) by 3D sand printing, in particular binder jet sand printing, wherein the mold part (310,320, 330) preferably comprises a zirconium coating.

6. The method of any of claims 1 to 5, wherein the infill percentage of the ceramic core (340) is set below 50%, preferably below 20%, further preferably below 10%, further preferably below 5%.

7. The method of any of claims 1 to 6, wherein the tooling component (200, 350) is cast with a hot-working tool steel, in particular a H13 steel.

8. The method of any of claims 1 to 7, wherein the tooling component (200, 350) is a steel insert for aluminum casting.

9. The method of any of claims 1 to 8, wherein the method further comprises:
- casting an aluminum component, in particular by low pressure die casting, high pressure die casting, rotary casting or gravity casting, using the tooling component.

10. Steel tooling component, wherein the steel tooling component (200, 350) is produced by a method of any of claims 1 to 9.

11. Use of a steel tooling component according to claim 10 for casting an aluminum component, in particular by low pressure die casting or high pressure die casting.
